(19) Europäisches Patentamt
European Patent Office
Office européen des brevets

(11) Numéro de publication : **0 298 805 B1**

(12) **FASCICULE DE BREVET EUROPEEN**

(51) Int. Cl.⁵ : **B29D 11/00, G02C 7/04**

(45) Date de publication du fascicule du brevet :
27.03.91 Bulletin 91/13

(21) Numéro de dépôt : **88401510.8**

(22) Date de dépôt : **17.06.88**

54 **Procédé de fabrication de lentille de contact en un polymère protéique naturel par moulage avant réticulation.**

(30) Priorité : 07.07.87 FR 8709619

(43) Date de publication de la demande :
11.01.89 Bulletin 89/02

(45) Mention de la délivrance du brevet :
27.03.91 Bulletin 91/13

(84) Etats contractants désignés :
**CH DE GB IT LI**

(56) Documents cités :
**EP-A- 0 089 705**
**FR-A- 1 543 765**
**GB-A- 602 126**
**US-A- 4 264 493**
**PATENT ABSTRACTS OF JAPAN, vol. 8, no. 143 (M-306)[1580], 4 juillet 1984, page 131 M 306; & JP-A-59 41 231 (HITACHI SEISAKUSHO K.K.) 07-03-1984**

(73) Titulaire : **ESSILOR INTERNATIONAL, Cie Générale d'Optique**
**1 Rue Thomas Edison, Echat 902**
**F-94028 Créteil Cédex (FR)**

(72) Inventeur : **Bourset, Claude**
**3/21 allée J. Poncelet**
**F-94000 Creteil (FR)**
Inventeur : **Wajs, Georges**
**69 avenue Daniel Casanova**
**F-94200 Ivry (FR)**

(74) Mandataire : **CABINET BONNET-THIRION**
**95 Boulevard Beaumarchais**
**F-75003 Paris (FR)**

## Description

L'invention se rapporte à un procédé de fabrication d'une lentille de contact souple à partir d'un polymère protéique biologique, où l'on constitue un hydrogel par hydratation du polymère protéique, on confine une quantité déterminée de l'hydrogel dans la cavité d'un moule en au moins deux parties apte à définir, après verrouillage réciproque de ses parties, une forme tridimensionnelle avec un état de surface de lentille finie, l'hydrogel étant liquéfié à une température supérieure à 50°C, puis gélifié par refroidissement dans le moule, après quoi le gel est réticulé par contact avec un agent de réticulation.

Le document de brevet EP-A-0 011 52.3 décrit des polymères protéiques naturels, d'origine végétale ou animale, notamment du type connu sous le nom de gélatines, présentant un poids moléculaire compris entre 10 000 et 100 000 susceptible de gonflement par l'eau pour former des hydrogels, avec des taux d'hydratation compris entre 0,3 et 10.

La mise en oeuvre de ces polymères protéiques naturels comprend la formation d'hydrogels (couramment dits solutions) contenant de 0,5 à 15% en poids de protéines ou mélange de protéines par gonflement dans de l'eau ou une solution aqueuse, puis on chauffe les hydrogels à 60° ± 5°C pour être homogènes et limpides, et l'on ajuste le pH entre 3,5 et 5,5 environ. On peut éventuellement ajouter un tannant, tel que l'alun de fer ammoniacal, pour améliorer la stabilité de l'hydrogel. Après cela, on ajoute à l'hydrogel, maintenu à la température précédente, un agent de réticulation tel que la formaline (solution de formaldéhyde à 37%) en quantité comprise, en poids, entre 0,5 et 15%, on coule l'hydrogel fluide dans un moule approprié jusqu'à fin de réticulation, puis on sèche les lentilles démoulées à l'air, à une température d'au plus 35°C jusqu'à ramener le taux d'humidité à moins de 10%.

Si la lentille coulée est colorée, on peut la blanchir par l'action d'agents oxydants, tels que l'eau oxygénée.

Le document de brevet FR-A-2 586 703 décrit un procédé d'extraction de collagènes placentaires gélifiés, propres également à la préparation de lentilles de contact, ces collagènes étant enrichis en type IV ; leur mise en oeuvre est très voisine de celle des hydrogels selon EP-A-0 011 523. Toutefois, les hydrogels de collagène se liquéfient à des températures plus basses que les hydrogels de gélatine.

On notera qu'un intérêt essentiel d'utiliser des hydrogels protéiques naturels réside dans leur biocompatibilité, déterminante pour la tolérance par le sujet porteur ; de ce point de vue, les collagènes placentaires, humains ou animaux présentent une biocompatibilité très remarquable à l'égard, respectivement des organismes humains ou animaux, dans le genre considéré. Bien entendu, pour l'application aux lentilles de contact, on utilisera de préférence des collagènes placentaires humains.

Le document de brevet FR-A-2 565 160 décrit un procédé de réalisation de lentilles de contact souples en polymère protéique du genre défini dans le document EP-A-0 011 523, procédé suivant lequel on introduit un hydrogel de polymère protéique dans un moule en deux parties, à une température de liquéfaction d'environ 60° à 80°C, où l'hydrogel coule, on assure la gélification en refroidissant le moule, on extrait la lentille du moule, et on met au contact d'un mélange de solvants choisis pour éviter une dégradation de l'hydrogel gélifié, ce mélange contenant un agent de réticulation tel que notamment un aldéhyde ; l'agent de réticulation diffuse dans l'hydrogel gélifié et l'insolubilise. Après cela, la lentille est lavée puis introduite dans une solution de conservation.

On appréciera que le processus suivant FR-A-2 565 160, où la lentille est mise en forme par simple gélification de l'hydrogel résultant du refroidissement du moule autorise une "durée de vie en pot" de l'hydrogel avant coulée nettement supérieure à celle qu'autorise le processus suivant EP-A-0 011 523, où l'hydrogel contient, avant la coulée, l'agent de réticulation. On rappelle que l'on appelle "durée de vie en pot" d'un mélange polymérisable destiné à la mise en forme d'articles, l'espace de temps qui s'écoule entre la préparation du mélange et le moment où la polymérisation est trop avancée pour que la mise en forme soit possible

Le document FR-A-2 565 160 a servi de base pour la rédaction du préambule de la revendication principale

Cependant, le maintien prolongé de l'hydrogel à la température de coulée présente un certain nombre d'inconvénients : à la température de coulée la vitesse de dégradation du polymère protéique n'est pas négligeable, avec une modification des propriétés rhéologiques de l'hydrogel, influençant la coulée, et un risque de dégradation plus rapide des lentilles de contact finies ; de plus, à la température de coulée, l'évaporation de l'eau de constitution de l'hydrogel est déjà notable, tandis que la viscosité de l'hydrogel varie rapidement en fonction de la teneur en eau ; or la qualité de la coulée dépend beaucoup de la viscosité de l'hydrogel. On ne peut, bien sûr, réduire la température de coulée, pour réduire la vitesse d'évolution de l'hydrogel, sans compromettre la qualité de la coulée, ainsi que la reproductibilité de la quantité d'hydrogel introduite dans les moules ; sur ce dernier point, on se souviendra que la quantité d'hydrogel introduite dans un moule est déterminée par un nombre de gouttes déposées, et que la masse d'une goutte est fonction de la tension superficielle de l'hydrogel, qui varie rapidement avec la température.

Pour pallier ces inconvénients, l'invention propose un procédé de fabrication d'une lentille de contact souple à partir d'un polymère protéique biologique, où l'on constitue un hydrogel par hydratation du polymère protéique, on confine une quantité déterminée de l'hydrogel dans la cavité d'un moule en au moins deux parties, apte à définir, après verrouillage réciproque de ses parties, une forme tridimensionnelle et un état de surface de lentille finie, l'hydrogel étant liquéfié à une température supérieure à 50°C, puis gélifié par refroidissement dans le moule, après quoi l'hydrogel est réticulé par contact avec un agent de réticulation procédé caractérisé en ce que l'on constitue une préforme de lentille à partir d'une quantité convenable d'hydrogel au moins égale à ladite quantité déterminée, à une température intermédiaire entre l'ambiante et la température de liquéfaction, on dispose la préforme dans un moule de finition en un matériau diélectrique à faibles pertes, et on porte l'hydrogel jusqu'à ladite température de liquéfaction en irradiant le moule par un champ électromagnétique de fréquence comprise entre $10^8$ et $10^{10}$ Hz, et on verrouille le moule avant refroidissement.

Il est bien connu que les substances polaires, et particulièrement celles qui contiennent de l'eau, absorbent fortement l'énergie électromagnétique aux fréquences élevées, notamment dans la gamme précisée ci-dessus. Aussi l'hydrogel confiné dans un moule et irradié dans un tel champ électromagnétique sera porté à la température de liquéfaction avant que le moule lui même ne chauffe notablement, tant en raison des faibles pertes diélectriques qu'il subit lui-même que de la relative lenteur de la diffusion de chaleur entre l'hydrogel qui s'échauffe et le moule. Ainsi, dès l'arrêt de l'irradiation électromagnétique, l'hydrogel commencera à refroidir au contact des parties du moule ; en outre, le verrouillage du moule a pour effet de presser l'hydrogel contre les parois de ce moule et donc d'améliorer le contact entre hydrogel et moule. Ainsi l'hydrogel, au cours du processus de mise en forme de la lentille de contact n'est porté que très peu de temps à la température de liquéfaction, de sorte que sa composition et des propriétés n'évoluent que très lentement au cours de la fabrication de lentilles de contact successives d'un lot.

En outre, les variations de température du moule au cours du cycle de fabrication se situent entre des limites relativement étroites autour de l'ambiante, et notamment le maximum de température est peu élevé. Les moules ne subissent de ce fait que des variations irréversibles de forme pratiquement négligeables (par relâchement de contraintes internes, par exemple), ce qui est appréciable en raison des tolérances de dimension serrées qui sont nécessaires pour la bonne exploitation de la fabrication des lentilles de contact.

On appréciera que, contrairement à ce que l'on aurait pu craindre d'hystérésis et d'anisotropie de comportement d'hydrogels soumis à des variations de température rapides dans le cycle de liquéfaction, les lentilles démoulées présentaient d'excellentes qualités dimensionnelles, mécaniques et optiques.

On observera qu'il a été proposé antérieurement d'induire la réticulation d'un polymère par irradiation haute fréquence dans un moule pour lentilles de contact souple ; ainsi le document de brevet FR-A-2 477 059 décrit la réticulation de monomères acryliques ou vinyliques greffés. Mais il s'agit là d'une application de chauffage par pertes diélectriques à but radicalement différent de celui de la présente invention.

En effet, selon le document immédiatement précité, la matière polymérisable doit contenir un catalyseur de polymérisation sensible à la chaleur, avant d'être déposée dans les moules, ce qui limite nécessairement la 'vie en pot' du mélange. De plus, la bonne conduite de la polymérisation exige des durées d'irradiation d'au moins une heure, pour maîtriser les risques de surchauffe. En contraste, selon la présente invention, le chauffage a pour résultat d'amener de façon transitoire l'hydrogel à une fluidité appropriée à l'obtention d'un excellent état de surface et une mise en forme définitive. Typiquement, le chauffage sera de l'ordre de la demi-minute. De plus, l'irradiation ne déclenche pas de phénomène exothermique, et reste en conséquence contrôlable.

De préférence, la fréquence du champ électromagnétigue sera d'environ 2,45 GHz, dans une bande du spectre affectée à l'utilisation et l'énergie électromagnétique pour le chauffage, où les générateurs sont aisément disponibles.

Les températures de liquéfaction se situeront de préférence dans les gammes pratiquées pour la coulée des hydrogels de l'état de la technique, soit 50°-80°C.

Les polymères protéiques préférés sont, soit du type gélatine selon EP-A-0 011 523, soit du collagène enrichi en type IV selon FR-A-2 586 703. On notera que les températures de liquéfaction des gélatines se situent en général entre 70° et 80°C, tandis que celles des collagènes se situent plutôt entre 50° et 60°C.

De préférence, l'intensité du champ électromagnétique sera réglée à une valeur telle que la température de liquéfaction sera atteinte après une durée d'irradiation comprise entre 5 et 45 secondes, et mieux 10 et 30.

On comprendra que la mesure de la température ne saurait être faite directement en raison, tant de la faible masse des lentilles que de l'environnement lors du chauffage. La reproductibilité du résultat du moulage dépend donc étroitement de celle des paramètres de chauffage, intensité et durée, déterminées au préalable expérimentalement.

Si le chauffage de l'hydrogel était strictement adiabatique, la température de liquéfaction serait obtenue lorsque l'hydrogel confiné dans le moule aurait absorbé une énergie déterminée ; par ailleurs, la température du moule ne varierait pas sensiblement et le refroidissement après verrouillage serait obtenu dans les meilleures conditions. C'est la raison pour laquelle on se fixe une durée maximale de chauffage.

Mais en contrepartie, plus la durée de chauffage est courte, et plus la reproductibilité précise de la durée de chauffage est difficile à obtenir ; ainsi, est-il utile de fixer une limite inférieure de durée. En outre, le facteur de perte de l'hydrogel croit avec la température, comme celui de la plupart des matières ; à utiliser des densités d'énergie trop élevées, pour raccourcir la durée de chauffage, on risquerait des emballements locaux.

La préforme, préparée avec de l'hydrogel à consistance pâteuse, peut comporter une collerette mince entourant une zone utile ; le poids de la préforme peut alors excéder celui de la lentille finie de 20 à 40%. La collerette facilite les manipulations de la préforme, fragile, et est éliminée lors du moulage.

On peut notamment constituer une plaque d'hydrogel d'épaisseur voisine de l'épaisseur maximale de la lentille, et découper dans cette plaque des rondelles qui constitueraient préforme.

On peut encore constituer la préforme avec un volume sensiblement égal à celui de la lentille finie, le poids de la préforme n'excédant alors celui de la lentille finie que de 2 à 4%.

Les manipulations des préformes sont alors plus délicates, mais les pertes de matières sont plus réduites

On peut faciliter les manipulations de préformes en les munissant, sur au moins une de leurs faces, d'un film de polymère synthétique qui déborde de la préforme sur toute sa périphérie, le film étant apte à moins adhérer au moule qu'au polymère protéique et étant supprimé lors de la réticulation

Les caractéristiques et avantages de l'invention ressortiront d'ailleurs de la description qui va suivre, assortie d'exemples de réalisation.

Les moules utilisés sont classiques, et par exemple du type décrit dans le document de brevet EP 0 003 695 avec, essentiellement, une partie concave et une partie convexe qui déterminent entre elles la forme de la lentille de contact avec ses rayons de courbure ; le bord de la partie concave est en forme de tronc de cône pour définir le biseau de bord de la lentille, et sa périphérie est anguleuse pour cisailler l'excès périphérique de matière de lentille.

Un système de jupe solidaire d'une partie de moule s'engage à frottement sur une zone cylindrique solidaire de l'autre partie. En pressant les parties l'une vers l'autre jusqu'à contact à la périphérie de la cavité gui détermine la forme de la lentille, le moule se verrouille sur la lentille étroitement confinée.

Les moules sont réalisés en matériau diélectrique à faibles pertes, notamment en polyamide (RILSAN ®) en polycarbonate injecté, ou en polypropylène.

pour les opérations de moulage et verrouillage, on charge les préformes sur une partie des moules, on engage l'autre partie sur la première, sans forcer. Les moules sont alors disposés entre les plateaux d'une presse portative à commande par fluide sous pression, entièrement réalisée en matériaux diélectriques à faible pertes. La presse est introduite dans une enceinte d'un four à micro-onde, la commande de régime est ajustée, et l'énergie électromagnétique appliquée pendant une durée déterminée. Après coupure du chauffage, une pression de fluide est appliquée à la presse en sorte de verrouiller les moules.

En variante, les moules sont disposés dans un montage constitué de deux plaques en matériau diélectrique à faible perte, entre les plaques. Après chauffage, le montage est porté entre les plateaux d'une presse quelconque, pour verrouiller les moules.

Après cela, les moules sont portés dans une enceinte réfrigérée vers 4°C, pour que l'hydrogel prenne par gélification une consistance suffisamment ferme pour que les lentilles puissent être démoulées, puis réticulées par contact avec un agent de réticulation, par exemple suivant les processus décrits dans FR-A-2 565 160 ; elles peuvent aussi être réticulées en phase vapeur.

On notera que les opérations gui suivent le moulage sont en soi connues, de sorte que leur description détaillée serait superflue.

EXEMPLE 1. Préparation d'un hydrogel de gélatine

On fait gonfler dans 400 ml d'eau désionisée 100 g de gélatine en poudre, pendant une durée de 2 à 11 heures (poids moléculaire : environ 50 000 ; opalescence 225). Le mélange est ensuite porté à 60° ± 5°C pesant 30 min en homogénéisant. L'hydrogel formé, à consistance pâteuse est coulé en préformes dans des moules.

On a déterminé sur des échantillons que la température de liquéfaction se situait vers 70°-80°C.

Au cours des essais, on a utilisé deux types de préformes.

Les unes comportaient une zone centrale sensiblement à la forme de la lentille finie, et une collerette annulaire d'épaisseur 0,3 mm environ : elles ont été obtenues par injection dans un moule de forme complémentaire de celle de la préforme d'une quantité d'hydrogel de poids excédant celui de la lentille finie de 20 à 40%, en moyenne 30%.

Les autres étaient constituées sensiblement à la forme de la lentille finie ; on injectait dans un moule semblable aux moules de lentille finie une quantité d'hydrogel en excédant en poids de celui de la lentille finie de 2 à 4%, en moyenne 3%.

Les préformes obtenues peuvent être utilisées immédiatement après démoulage. Sinon, elles sont disposées sous dépression dans des alvéoles de plaques en matériau polymère recouvertes d'une feuille de fermeture soudée ou collée, et sont stockées à 4°C environ ; les préformes emballées sont ainsi conservées à l'abri d'une déshydratation.

Bien entendu, on peut ajouter à l'eau de gonflage des agents aptes à stabiliser le pH et l'aptitude à la gélification : par exemple, on peut ajouter 4 g d'alun de fer ammoniacal.

## EXEMPLE 2. Moulage de lentilles

Des préformes préparées suivant l'exemple 1 sont placées dans des moules de lentilles finies, comme il a été décrit plus haut, et ces moules sont disposés entre plateaux d'une presse portative, ainsi qu'il a été décrit également. La presse et les moules chargés sont placés dans un four à micro-onde à 2,45 GHz.

Le four est réglé pour délivrer une puissance électromagnétique de 500 watts, et cette puissance appliquée aux moules pendant 30 secondes.

Après arrêt de l'irradiation, on applique une pression de fluide à la presse pour verrouiller les moules. puis ceux-ci sont sortis du four et portés dans une enceinte refroidie à 4°C environ.

Lorsque les moules ont pris dans leur ensemble la température de 4°C, les lentilles sont démoulées avec précaution, puis réticulées selon le processus décrit dans FR-A-2 565 160.

## EXEMPLE 3. Moulage de lentilles

Des préformes préparées suivant l'exemple 1 sont placées dans des moules, et ces moules sont disposés dans une presse, et l'ensemble mis dans un four à micro-onde. comme dans l'exemple 2.

La puissance a été réglée à 700 watts et la durée de chauffage s'est échelonnée entre 5 et 20 secondes, avec les meilleurs résultats vers 15 secondes.

Les lentilles ont été pressées, refroidies et réticulées comme à l'exemple 2.

## EXEMPLE 4. Préparation d'un hydrogel de collagène

On prend du collagène de placenta humain enrichi en type IV, préparé suivant les enseignements de FR-A-2 586 703, séché en fibres.

15 g de poudre de collagène est mis à gonfler dans 85 ml de sérum physiologique (eau désionisée à 9 g/l de NaCl), pendant 2 à 15 heures.

Après gonflement, le mélange est porté à une température comprise entre 20 et 45°C, typiquement 30°C pendant 30 min, en homogénéisant

L'hydrogel obtenu limpide est coulé sur un plateau plan et étalé à la raclette pour former une couche d'épaisseur régulière de 0.5 mm. La température de liquéfaction se situe entre 50° et 60°C.

Le plateau est ensuite porté dans une enceinte réfrigérée 4°C environ. Quand il a obtenu sensiblement sa température d'équilibre, la plaque d'hydrogel gélifié est décollée, puis des préformes sont découpées dans cette plaque, sous forme de plaquettes circulaires de diamètre 15 à 20 mm.

Là encore, les plaquettes peuvent être utilisées immédiatement pour le moulage de lentilles de contact, ou emballées sous dépression dans les alvéoles d'une plaque recouverte d'une feuille collée, et conservées à 4°C.

## EXEMPLE 5. Moulage de lentilles en collagène

Les préformes obtenues suivant l'exemple 4 sont placées dans des moules, ceux-ci disposés entre des plateaux de presse, dans les mêmes conditions qu'aux exemples 2 et 3.

La puissance électromagnétigue appliquée à 2,45 GHz, était de 500 watts. Les durées de chauffage se sont échelonnées de 5 à 30 secondes, le meilleur résultat étant obtenu en 20 secondes environ.

Les lentilles obtenues après achèvement du processus de fabrication se montrent particulièrement bien tolérées biologiquement.

On appréciera que, dans le processus de l'invention où les moules ne sont pas préchauffés avant le coulage de l'hydrogel, et où le chauffage à liquéfaction de l'hydrogel n'élève que peu la température des moules, ces moules parcourent des cycles de température où le minimum se situe vers 4°C, et le maximum en dessous de 35°C. Dans ces conditions, les moules ne subissent pratiquement pas d'évolution irréversible de forme, notamment par relâchement de contraintes internes. Ainsi le processus de l'invention permet une détermination bien précise des formes tridimensionnelles des lentilles finies, et peut accroître la longévité des moules

On notera, cependant, que les opérations qui vont du démoulage de la lentille, gui est à sa forme définitive, à l'exécution de la réticulation restent délicates, en raison de la fragilité des hydrogels avant réticulation, et des exigences sur l'absence de déformations et d'érosion des surfaces des lentilles.

Ainsi peut-on garnir les préformes, de préférence du type dont le volume est sensiblement celui de la future lentille finie, d'un film d'un polymère synthétique, déposée sur une ou sur les deux surfaces de la préforme, en débordant franchement sur le pourtour. Le polymère synthétique peut être, par exemple, un alcool polyvinylique. Ce garnissage peut s'effectuer par pulvérisation du polymère dans un solvant, l'épaisseur du film déposé se situant entre 5 et 50 µm.

Ce film protège les surfaces optiques de la lentille, du contact du moule lors de l'opération de liquéfaction de l'hydrogel, et lors du démoulage de la lentille, grâce au fait que l'adhérence du film est plus faible vers le moule que vers l'hydrogel. par ailleurs, ce film va disparaître pour la réticulation, soit qu'on le supprime avant la réticulation, soit qu'il se dissolve dans le milieu porteur de l'agent de réticulation.

Bien entendu, l'invention n'est pas limitée aux exemples décrits, mais en embrasse toutes les variantes d'exécution, dans le cadre des revendications.

## Revendications

1. Procédé de fabrication d'une lentille de contact souple à partir d'un polymère protéique biologique, où l'on constitue un hydrogel par hydratation du polymère protéique, on confine une quantité déterminée de l'hydrogel dans la cavité d'un moule en au moins deux parties, apte à définir, après verrouillage réciproque de ses parties, une forme tridimensionnelle et un état de surface de lentille finie, l'hydrogel étant liquéfié à une température supérieure à 50°C, puis gélifié par refroidissement dans le moule, après quoi l'hydrogel est réticulé par contact avec un agent de réticulation, procédé caractérisé en ce que l'on constitue une préforme de lentille à partir d'une quantité convenable d'hydrogel au moins égale à ladite quantité déterminée, à une température intermédiaire entre l'ambiante et la température de liquéfaction, on dispose la préforme dans un moule de finition en un matériau diélectrique à faibles pertes, on porte l'hydrogel jusqu'à ladite température de liquéfaction en irradiant le moule par un champ électromagnétique de fréquence comprise entre $10^8$ et $10^{10}$ Hz, et on verrouille le moule avant refroidissement.

2. Procédé suivant la revendication 1, caractérisé en ce que la fréquence du champ électromagnétique est d'environ 2,45 GHz.

3. Procédé suivant l'une des revendications 1 et 2, caractérisé en ce que la température de liquéfaction est comprise entre 50° et 80°C.

4. Procédé suivant l'une quelconque des revendications 1 à 3, caractérisé en ce que le polymère protéique biologique est du type gélatine

5. Procédé suivant l'une quelconque des revendications 1 à 3, caractérisé en ce que le polymère protéique biologique est un collagène enrichi en type IV.

6. Procédé suivant l'une quelconque des revendications 1 à 5, caractérisé en ce que l'intensité du champ électromagnétique est réglée à une valeur telle que la température de liquéfaction soit atteinte après une durée d'irradiation comprise entre 5 et 45 secondes

7. Procédé suivant la revendication 6, caractérisé en ce que la durée d'irradiation est comprise entre 10 et 30 secondes.

8. Procédé suivant l'une quelconque des revendications 1 à 7, caractérisé en ce que l'on constitue la préforme avec une collerette entourant une zone utile correspondant à la lentille finie, le poids de la préforme excédant celui de la lentille finie de 20 à 40%.

9. Procédé suivant une quelconque des revendications 1 à 8, caractérisé en ce que l'on constitue la préforme par découpe circulaire dans une plaque d'hydrogel d'épaisseur voisine de l'épaisseur maximale de la lentille finie, le volume de la préforme excédant celui de la lentille finie

10. Procédé suivant une quelconque des revendications 1 à 7, caractérisé en ce que l'on constitue la préforme sensiblement au volume de la lentille finie, le poids de la préforme excédant celui de la lentille finie de 2 à 4%.

11. Procédé suivant la revendication 10, caractérisé en ce que la préforme est munie, au moins sur une de ses faces, d'un film de polymère synthétique qui déborde de la préforme sur toute sa périphérie, ce film étant apte à moins adhérer au moule qu'au polymère protéique, et étant supprimé lors de la réticulation.

## Ansprüche

1. Verfahren zum Herstellen einer Weichkontaktlinse aus einem biologischen Proteinpolymer, bei dem man durch Hydratation des Proteinpolymers ein Hydrogel bildet, eine vorbestimmte Menge des Hydrogels in die Aufnahme einer Form aus mindestens zwei Teilen einbringt, welche nach gegenseitigem Verschließen ihrer Teile geeignet ist, eine dreidimensionale Form und einen Oberflächenzustand der fertigen Linse zu bilden, wobei man das Hydrogel bei einer Temperatur oberhalb von 50°C verflüssigt, danach durch Abkühlen in der Form geliert, wonach man das Hydrogel durch Kontakt mit einem Vernetzungsmittel vernetzt, **dadurch gekennzeichnet,** daß man bei einer Temperatur zwischen Umgebungstemperatur und der Verflüssigungstemperatur einen Linsenvorformling bildet aus einer geeigneten Hydrogelmenge, die mindestens gleich der vorbestimmten Menge ist, den Vorformling in eine Endform aus einem dielektrischen Material von geringem Verlust einbringt, das Hydrogel durch Bestrahlen der Form mit einem elektromagnetischen Feld mit einer Fequenz zwischen $10^8$ und $10^{10}$ Hz auf die Verflüssigungstemperatur bringt, und die Form nach dem Abkühlen verschließt.

2. Verfahren nach Anspruch 1, dadurch gekennzeichnet, daß die Frequenz des elektromagnetischen Feldes in der Nähe von 2,45 GHz liegt.

3. Verfahren nach einem der Ansprüche 1 und 2, dadurch gekennzeichnet, daß die Verflüssigungstemperatur 50 bis 80°C beträgt.

4. Verfahren nach einem der Ansprüche 1 bis 3, dadurch gekennzeichnet, daß das biologische Proteinpolymer vom Gelatine-Typ ist.

5. Verfahren nach einem der Ansprüche 1 bis 3, dadurch gekennzeichnet, daß das biologische Proteinpolymer ein mit Typ IV angereichertes Kollagen ist.

6. Verfahren nach einem der Ansprüche 1 bis 5, dadurch gekennzeichnet, daß die Stärke des elektromagnetischen Feldes auf einen Wert geregelt wird, bei dem die Verflüssigungstemperatur nach einer Bestrahlungsdauer zwischen 5 und 45 Sekunden erreicht wird.

7. Verfahren nach Anspruch 6, dadurch gekennzeichnet, daß die Bestrahlungsdauer 10 bis 30 Sekunden beträgt.

8. Verfahren nach einem der Ansprüche 1 bis 7, dadurch gekennzeichnet, daß man den Vorformling mit einem Kragen ausbildet, der einen der fertigen Linse entsprechenden Nutzbereich umgibt, wobei das Gewicht des Vorformlings dasjenige der fertigen Linse um 20 bis 40% übersteigt.

9. Verfahren nach einem der Ansprüche 1 bis 8, dadurch gekennzeichnet, daß man den Vorformling bildet durch kreisförmiges Ausschneiden aus einer Hydrogelscheibe mit einer Dicke in der Nähe der Maximaldicke der fertigen Linse, wobei das Volumen des Vorformlings dasjenige der fertigen Linse übersteigt.

10. Verfahren nach einem der Ansprüche 1 bis 7, dadurch gekennzeichnet, daß man den Vorformling genau mit dem Volumen der fertigen Linse bildet, wobei das Gewicht des Vorformlings dasjenige der fertigen Linse um 2 bis 4% übersteigt.

11. Verfahren nach Anspruch 10, dadurch gekennzeichnet, daß der Vorformling auf mindestens einer seiner Seiten mit einem synthetischen Polymerfilm versehen ist, der vom Vorformling entlang seines gesamten Umfanges hervorsteht, wobei der Film geeignet ist, an der Form ausgenommen am Proteinpolymer anzuhaften und beim Vernetzen beseitigt wird.

## Claims

1. A process for the production of a flexible contact lens from a protein biological polymer in which a hydrogel is formed by hydration of the protein polymer, a given amount of the hydrogel is confined in the cavity of a mould consisting of at least two parts and capable after its parts are locked together of defining a three-dimensional shape and a finished lens surface state, the hydrogel being liquefied at a temperature of higher than 50°C and then gelled by cooling in the mould, after which the hydrogel is cross-linked by contact with a cross-linking agent, the process being characterised in that a lens preform is formed from a suitable amount of hydrogel which is at least equal to said given amount, at a temperature intermediate between ambient temperature and the liquefaction temperature, the preform is disposed in a finishing mould made of a low-loss dielectric material, the hydrogel is raised to said liquefaction temperature by irradiating the mould by means of an electromagnetic field at a frequency of between $10^8$ and $10^{10}$ Hz, and the mould is locked before cooling.

2. A process according to claim 1 caracterised in that the frequency of the electromagnetic field is about 2.45 GHz.

3. A process according to one of claim 1 and 2 caracterised in that the liquefaction temperature is between 50° and 80°C.

4. A process according to any one of claims 1 to 3 characterised in that the protein biological polymer is of the gelatine type.

5. A process according to any one of claims 1 to 3 characterised in that the protein biological polymer is a type IV enriched collagen.

6. A process according to any one of claim 1 to 5 characterised in that the intensity of the electromagnetic field is regulated at a value such that the liquefaction temperature is attained after an irradiation time of between 5 and 45 seconds.

7. A process according to claim 6 caracterised in that the irradiation time is between 10 and 30 seconds.

8. A process according to any one of claim 1 to 7 characterised in that the preform is formed with a flange surrounding an active zone corresponding to the finished lens, the weight of the preform exceeding that of the finished lens by 20 to 40%.

9. A process according to any one of claims 1 to 8 characterised in that the preform is made by cutting out a circle from a plate of hydrogel of a thickness close to the maximum thickness of the finished lens, the volume of the preform exceeding that of the finished lens.

10. A process according to any one of claim 1 to 7 characterised in that the preform is made of substantially the same volume as the finished lens, the weight of the preform exceeding that of the finished lens by 2 to 4%.

11. A process according to claim 10 characterised in that the preform is provided at least on one of its faces with a film of synthetic polymer which extends beyond the preform over the entire periphery thereof, said film being capable of adhering less to the mould than to the protein polymer, and being eliminated in the cross-linking operation.